# EUROPEAN PATENT APPLICATION

(11) **EP 1 862 907 A2**
(43) Date of publication of application: **05.12.2007**
(21) Application number: 07250797.3
(22) Date of filing: 26.02.2007
(51) Int. Cl.: G06F 12/08

(54) **Cache memory device and caching method**

(30) Priority: 30.05.2006 JP 2006150445
(71) Applicant: KABUSHIKI KAISHA TOSHIBA, Tokyo 105-8001 (JP)
(72) Inventor: Asano, Shigehiro, c/o Intellectual Property Division, c/o Kabushiki Kaisha Toshiba, Tokyo 105-8001 (JP); Yoshikawa, Takashi, c/o Intellectual Property Division, c/o Toshiba Corporation, Tokyo 105-8001 (JP)
(74) Representative: Maury, Richard Philip

(57) **Abstract**

A cache memory device (30) includes a command receiving unit that receives a plurality of commands from each of a plurality of processors; a processing unit (304) that performs a process based on each of the commands; and a storage unit (301) that stores in a queue (330) a first command, when the command receiving unit (301) receives the first command while the processing unit (304) is processing a second command, a cache line address corresponding to the first command being identical to the cache line address corresponding to the second command which is being processed by the processing unit (304).

## Description

### CROSS-REFERENCE TO RELATED APPLICATIONS

This application is based upon and claims the benefit of priority from the prior Japanese Patent Application No. 2006-150445, filed on May 30, 2006; the entire contents of which are incorporated herein by reference.

### BACKGROUND OF THE INVENTION

### 1. Field of the Invention

The present invention relates to a cache memory device and a processing method using the cache memory for receiving commands from a plurality of processors.

### 2. Description of the Related Art

By virtue of recent progress in semiconductor microelectronics technology, a plurality of processors can be integrated on a single semiconductor substrate. On the other hand, cache memory technologies to conceal memory latency have been widely used, and improving throughput of a cache memory is a key essential to improving a system performance. Furthermore, a mechanism that performs an exclusive access among a plurality of processors is absolutely essential to describing parallel programs. As the mechanism of the exclusive access, for example, US Patent No. 5276847 discloses a technology of providing a lock signal to a bus so that no processor can access an address of which the lock signal is valid.

However, in a device in which a plurality of processors share a common cache, when a plurality of requests are issued to a certain cache line and a second access takes place before the cache is overwritten by a first access, the same process is performed by the second access, which is disadvantageous.

Moreover, if a requested data is not found in the cache, the processor generally accesses a main memory which is located on the next hierarchy. However, the access to the main memory is slow and consumes much electric power. Furthermore, capability of performing a plurality of accesses at a time disables an exclusive access to the cache.

### SUMMARY OF THE INVENTION

According to one aspect of the present invention, a cache memory connected to a plurality of processors includes a command receiving unit that receives a plurality of commands from each of the plurality of processors; a processing unit that performs a process based on each of the commands; and a storage unit that stores in a queue a first command, when the command receiving unit receives the first command while the processing unit is processing a second command, a cache line address corresponding to the first command being identical to the cache line address corresponding to the second command which is being processed by the processing unit.

According to another aspect of the present invention, a cache memory connected to a plurality of processors includes a command receiving unit that receives a plurality of commands from each of the plurality of processors; a processing unit that performs a process based on each of the received commands; a plurality of first state machines that are provided corresponding to types of the commands, and monitors a state of processing for each of the commands; and a storage unit that stores in a queue the command received by the command receiving unit, when the command receiving unit receives the command while all of the first state machines for the type of the command are occupied.

According to still another aspect of the present invention, a processing method in a cache memory connected to a plurality of processors includes receiving a plurality of commands from each of the plurality of processors; performing a process based on each of the commands; and storing in a queue a first command, when the first command is received while a second command is processed, a cache line address corresponding to the first command being identical to a cache line address corresponding to the second command which is being processed.

According to still another aspect of the present invention, a processing method in a cache memory connected to a plurality of processors includes receiving a plurality of commands from each of the plurality of processors; performing a process based on each of the received commands; and storing in a queue a command, when the command is received while all of first state machines for the type of the command are occupied among a plurality of the first state machines that are provided corresponding to types of the commands, and monitors a state of processing for each of the commands.

### BRIEF DESCRIPTION OF THE DRAWINGS

Fig. 1 is a block diagram of a bus system according to an embodiment of the present invention;
Fig. 2 is a schematic view of an address path in a level 2 (L2) cache;
Fig. 3 is a block diagram of a recycle queue;
Fig. 4 is a schematic view of a decode logic in a shift register for selecting an entry that indicates one in the rightmost bit;
Fig. 5 is a schematic view of a data path in the L2 cache;
Fig. 6 is a schematic view for explaining a process performed by a locking logic;
Fig. 7 is a bubble diagram for explaining state transition of an RC machine;
Fig. 8 is a bubble diagram for explaining state transition of a CPBK machine;
Fig. 9 is a bubble diagram for explaining state transition of an MRLD machine;
Fig. 10 is a bubble diagram for explaining state transition of an MCPBK machine;
Fig. 11 is a bubble diagram for explaining state transition of a lock machine;
Fig. 12 is a schematic view of an arbitration mechanism for running a single state machine requested by a plurality of state machines; and
Fig. 13 is a schematic view of a mechanism for the state machine to acquire a data memory.

### DETAILED DESCRIPTION OF THE INVENTION

Exemplary embodiments of the present invention are explained below in detail referring to the accompanying drawings. The present invention is not limited to the embodiments explained below.

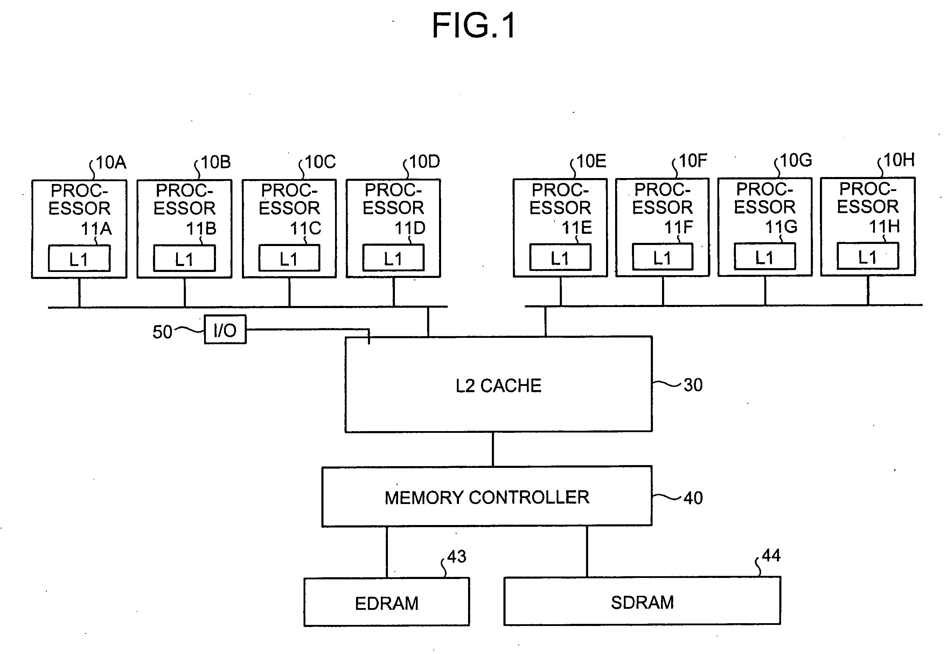

Fig. 1 is a block diagram of a bus system according to an embodiment. A bus system 1 includes eight processors 10A to 10H, an input/output (I/O) device 50, a level 2 (L2) cache 30, a memory controller 40, an internal embedded dynamic random-access memory (EDRAM) 43, and an external synchronous dynamic random-access memory (SDRAM) 44. The processors 10A to 10H are connected to the L2 cache 30. The I/O device 50 is also connected to the L2 cache 30. The L2 cache 30 is further connected to the memory controller 40.

Address information is transferred from each of the processors 10A to 10H to the L2 cache 30. The L2 cache 30 checks whether information requested by the processors 10A to 10H is cached in the L2 cache 30, and performs a predetermined operation based on the check result. When the requested information is not cached in the L2 cache, the memory controller 40 accesses the internal EDRAM 43 and the external SDRAM 44 based on the address.

The address information includes a command type (read, write, or the like) and a unit of data transfer (cache line size, byte, or the like) as well as the address of the memory requested by the processor, and the whole information is transferred at a time.

The L2 cache 30 is shared by the processors 10A to 10H. Each of the processors 10A to 10H issues a command, and the L2 cache 30 needs to process all of the commands. The processors 10A to 10H include level 1 (L1) caches 11A to 11H respectively, and a request in missing the corresponding L1 cache is transferred to the L2 cache 30 as a command.

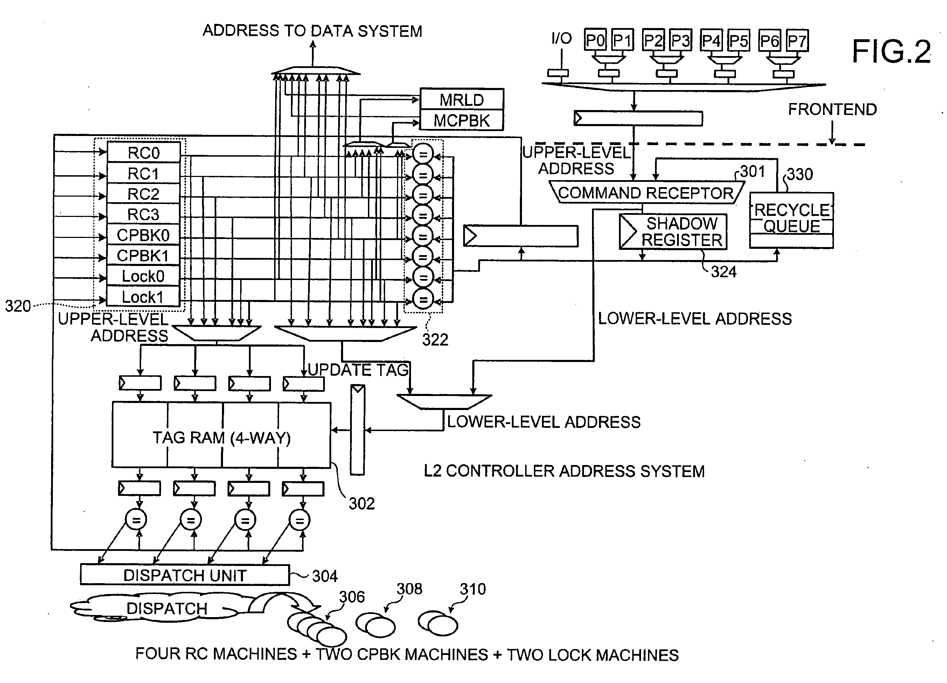

Fig. 2 is a schematic view of an address path in the L2 cache 30. A command from each of the processors 10A to 10H is input to a command receptor 301 in the L2 cache 30 via an arbitration mechanism in the bus. It is desirable to put a limit so that a command can be input to an L2 controller no more than once in two cycles. More specifically, a frequency of the bus can be set to, for example, a half of the frequency of the L2 controller. This simplifies a hardware configuration.

Among the addresses input to the L2 cache 30, a lower level address is used as an index of a tag for the L2 cache 30, and is transferred to a tag random access memory (tag-RAM) 302. An upper level address is compared with a result output from the tag-RAM 302. The present embodiment realizes a 4-way cache.

A dispatch unit 304 dispatches a state machine in the L2 controller based on the result of pulling the tag. According to the present embodiment, there are four RC machines 306, two CPBK machines 308, and two lock machines 310 as the state machines. Each of the RC machines 306 handles a read request to the L2 cache 30. Each of the CPBK machines 308 handles a copy-back operation from the L1 caches 11A to 11H to the L2 cache 30. Each of the lock machines 310 handles a lock request to the L2 cache.

Each of the state machines operates in association with a single command. Because the L2 cache 30 handles a plurality of commands at a time, a plurality of state machines can operate at the same time.

Registers corresponding to the four RC machines 306, two CPBK machines 308, and two lock machines 310 are provided as an outstanding address buffer 320. As soon as a state machine is dispatched, a corresponding register in the outstanding address buffer 320 stores therein the address being processed by each state machine. When the state machine completes the process, the corresponding register is cleared of the address.

Comparators 322 are provided in association with shadow register 324and each of registers in the outstanding address buffer 320. The comparators 322 are used to detect that a new request to the same address as that being processed by the L2 controller, namely the address being processed by any one of the RC machines 306, the CPBK machines 308, and the lock machines 310, is input to the L2 controller.

When a command is sent from one of the processors 10A to 10H, a cache line address in the command is transferred to the comparators 322. The comparators 322 compare it with each of cache line address stored in the corresponding register. If one of the comparators indicates an agreement, the command and the address are stored in a recycle queue (RecycleQhas 4 entries in this) 330.

When the preceding command, namely the command being processed is terminated, the command and the address are popped from the recycle queue 330. The L2 controller starts an implementation, and the cache line address popped from the recycle queue 330 is again transferred to the comparator 322. If there is no agreement, the dispatch unit 304 performs a dispatch corresponding to the command based on the result of pulling the tag.

The command and the like are entered to the recycle queue 330 not only when the comparator 322 indicates the agreement. For example, when any one type of the RC machine, the CPBK machine, and the lock machine is occupied and the command to the occupied type of machine is input, the command and the address are entered to the recycle queue 330. As described above, the command is input to the L2 controller only once in two cycles. As a result, when the corresponding state machine is determined to be full, the next command is already input to a shadow register 324 and stored in the recycle queue 330. When the recycle queue 330 is occupied, a pipeline from the processor to the L2 controller is stalled, and therefore the command cannot enter the L2 controller.

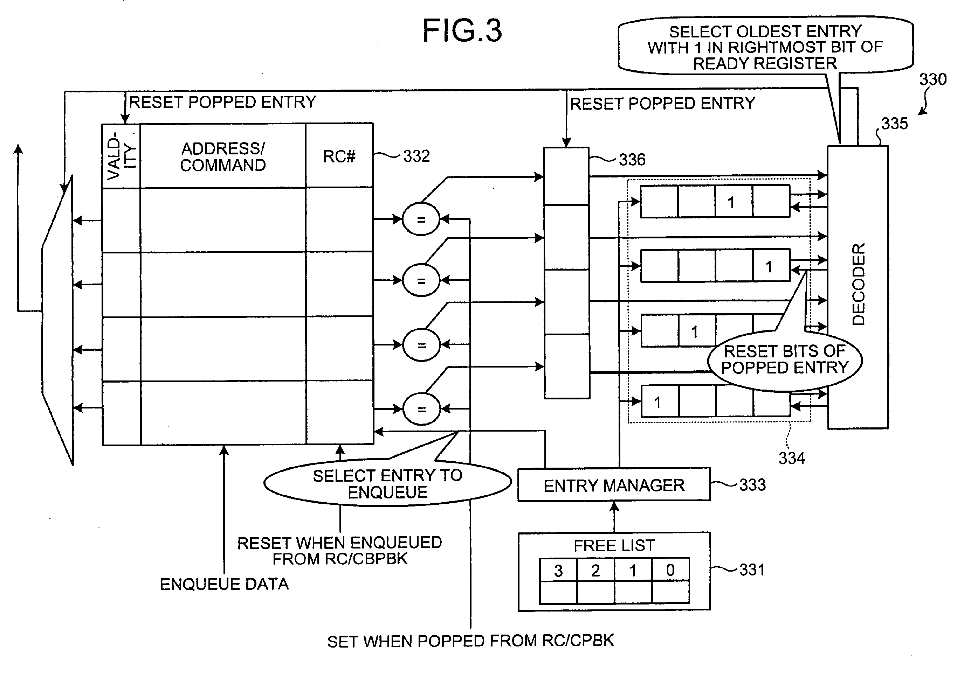

Fig. 3 is a block diagram of the recycle queue 330. The recycle queue 330 includes four entries 332. Each of the entries 332 includes a validity area, an address/command area, and an RC number area. The address/command area stores therein an address and a command. When the address and the command are stored in the address/command area, the validity area stores one. The RC number area includes information indicative of the cause of entering the command, namely the information for distinguishing the corresponding state machine.

According to the present embodiment, eight state machines are dispatched, and therefore eight bits are assigned to the RC number area. More specifically, bit 7 corresponds to an RC machine RC3; bit 6 corresponds to an RC machine RC2; bit 5 corresponds to an RC machine RC1; bit 4 corresponds to an RC machine RC0; bit 3 corresponds to a CPBK machine CPBK1; bit 2 corresponds to a CPBK machine CPBK0; bit 1 corresponds to a lock machine LOCK1; and bit 0 corresponds to a lock machine LOCKO.

For example, when the command matches an address of the RC machine RC2 and is entered to the recycle queue 330, the command and the address are set in the address/command area, and the corresponding RC number area indicates bit 6.

Otherwise, when any one type of the RC machine, the CPBK machine, and the lock machine is occupied, for example all of the four RC machines are used, and the recycle queue is available, all the bits in the RC number area of the corresponding entry 332 indicate one.

A free list 331 is a register assigned with four bits corresponding to the four entries 332. When an entry is vacant, a corresponding bit indicates zero. When the entry is in use, the corresponding bit indicates one.

When the address is entered to the recycle queue 330, one is set to a bit that currently indicates zero and is the least significant bit in the free list 331. An entry manager 333 sets information in one of the entries 332 corresponding to the bit that currently indicates one and is the least significant bit in the free list 331. Moreover, the entry manager 333 sets one to the most significant bit in one of the four shift registers 334 that corresponds to the entry 332 set with the information. The entry manager 333 then shifts the remaining three of the shift registers 334 to the right.

Because the shift register 334 shifts to the right every time information is set to the entries 332, an entry corresponding to the shift register 334 including the bit located farther to the right is older. In this manner, a decoder 335 can identify an older entry based on the location of the bit in the shift register 334.

A process of determining whether the recycle queue 330 includes an executable command is explained below. When any one of the RC machines, the CPBK machines, and the lock machines terminates the operation, one of the commands in the recycle queue 330 is selected. Specifically, the RC number area in all of the entries 332 in the recycle queue 330 and the bit corresponding to the terminated state machine are inspected. When both of the bit and the terminated state machine are one, a ready register 336 corresponding to the agreed entry is set with one. In other words, the command corresponding to the RC number area is selected.

The ready register 336 indicative of one indicates that a re-executable candidate is set to the corresponding entry. As a result, the information in the ready register 336 enables decision of whether the recycle queue 330 includes an executable command.

The entries 332 are sometimes set with a plurality of identical state machines. In other words, there can be a plurality of entries 332 indicating one in the ready register 336. In such a case, the decoder 335 selects any one of the plurality of commands as the command to be re-executed by the L2 controller.

Specifically, the command is selected based on the bit of the shift register 334. As described above, when information is set to each of the entries 332, the corresponding shift register 334 indicates one, and the bit shifts to the right every time a new entry is set. This means that the entry corresponding to the shift register 334 including one in the rightmost bit among the four shift registers 334 includes the oldest information. According to the present embodiment, the oldest entry is selected to prevent an entry from remaining unexecuted for a long time.

When a command is output from the entries 332 in the recycle queue 330, all of the bits in the ready register 336 corresponding to the selected entry 332, the bits in the corresponding free list 331, and the bits in the corresponding shift register 334 are reset. Moreover, the validity area of the selected entry 332 is revised from one to zero, and the information of the command and the address of the selected entry 332 is executed again by the L2 controller.

The L2 controller needs to determine which of the command from the processor or the command in the recycle queue 330 to execute first. It is assumed herein that the command in the recycle queue 330 is always selected when there is an executable command in the recycle queue 330. This process is performed by the command receptor 301. The command receptor 301 can also read the command.

According to the present embodiment, the pipes from the processors 10A to 10H to the L2 controller are stopped accepting new command when the recycle queue 330 is full or when the recycle queue 330 includes an executable command.

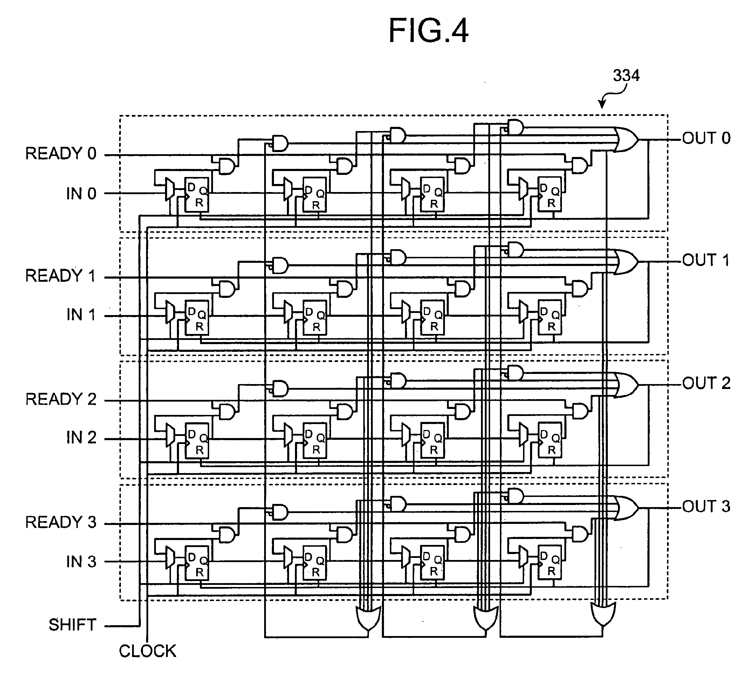

Fig. 4 is a schematic view of a decode logic for selecting an entry that indicates one in the rightmost bit. All the bits are shifted to the right when the shift signal indicates one. Because the recycle queue 330 according to the present embodiment can include four entries, four sets of the shift registers 334 are provided.

The bits in the ready register 336 corresponding to the entries in the recycle queue 330 are connected to READY0 to READY3, respectively. INO to IN3 are inputs to the shift register 334. When a new entry is set to the recycle queue 330, one is input to the corresponding input. OUT0 to OUT3 indicate one when the corresponding entry is selected. More specifically, an entry indicating one in the rightmost bit is selected among the shift registers 334 in which READY indicate one.

The configuration of the recycle queue 330 is not limited to the present embodiment. For example, the number of entries in the recycle queue 330 can be determined according to the required performance, and is not limited by the present embodiment. If the number of entries acceptable in the recycle queue 330 is too small, the pipelines from the processors to the L2 controller are easily stalled, and thus the performance deteriorates. If the number of the entries is too large, though the risk of stalling is reduced, the use efficiency of the recycle queue 330 becomes so low and the area size is wasted. It is preferable to determine the suitable number taking these into accounts.

While the tag is pulled and only reliably executable operations are popped from the recycle queue 330 according to the present embodiment, a simple first-in first-out (FIFO) configuration can be used instead of the shift register 334 to simplify the hardware configuration. The recycle queue 330 can be configured in any way only if one of the entries 332 can be selected from the recycle queue 330. However, with the FIFO configuration, there is a risk that an entry popped from the FIFO configuration hits the address in the outstanding address buffer 320 to be entered to the recycle queue 330 again.

Furthermore, according to the present embodiment, to prevent a starvation that an old entry remains in the recycle queue 330 for a long time, the entry that was entered to the recycle queue 330 at the oldest time is popped first. However, the recycle queue 330 can be configured so that, for example, each entry is popped after a predetermined time. The recycle queue 330 can take any configuration unless there can be any entry that will not be popped for ever.

As described above, the present embodiment ensures that the L2 controller does not perform more than one process at the same address because a second request for an address identical to the address being processed for a first request is stored in the recycle queue 330 to be executed after the first request is terminated.

Moreover, according to the present embodiment, when the second request accesses the same address as the first request, the second request is stored in the recycle queue 330 without accessing a main memory. This improves the performance of the cache memory device and reduces power consumption.

Next, a locking mechanism will be explained. As described above, it is guaranteed that the L2 controller according to the present embodiment processes no more than one request at the same address. Therefore, the locking mechanism can be realized if a predetermined command from the processors 10A to 10H can exclusively read and write the data in the L2 cache 30.

In the present embodiment, a lock command from one of the processors 10A to 10H is transferred directly to the L2 cache 30 without passing through the corresponding one of the L1 caches 11A to 11H. A lock machine starts in the L2 cache 30 as a state machine for the lock command. When the lock command hits the L2 cache 30, the lock machine reads and updates the data in the L2 cache 30. At the same time, the lock machine transfers the data read from the L2 cache 30 to the corresponding one of the processors 10A to 10H. When the lock command misses the L2 cache 30, the lock machine reads data from the internal EDRAM 43 or the external SDRAM 44 and transfers the data to the corresponding one of the processors 10A to 10H. The lock machine also overwrites the L2 cache 30 with the data read from the internal EDRAM 43 or the external SDRAM 44.

More specifically, the processors 10A to 10H include a test-and-set command as the lock command. Upon detecting the test-and-set command, the processors 10A to 10H transfer the address and the command to the L2 cache 30 assuming that the test-and-set command missed the L1 caches 11A to 11H.

To simplify the hardware, it is assumed that the test-and-set command is performed on only one location of a cache line. For example, the test-and-set command is performed on the smallest address byte in the cache line so that the lowest bit of the byte is set to one. The data except the lowest bit in the cache line to which the test-and-set command is performed are meaningless.

In the L2 cache 30, the following operations are performed against the test-and-set command. Tags in the L2 cache 30 are checked. It is guaranteed at this point that no other state machine is operating at the same address because of the effect of the recycle queue 330. When the test-and-set command hits the L2 cache 30, the data hit in the L2 cache 30 is transferred to the processors 10A to 10H. The data indicating one at the lowest bit is written to the cache line. The processors 10A to 10H can read the data before writing. When the test-and-set command misses the L2 cache 30, the test-and-set command transfers the data from the internal EDRAM 43 or the external SDRAM 44 to the L2 cache 30. The data in the L2 cache 30 is then transferred to the corresponding one of the processors 10A to 10H. The lowest bit of the cache line is set to one. The processors 10A to 10H can read the data before setting one.

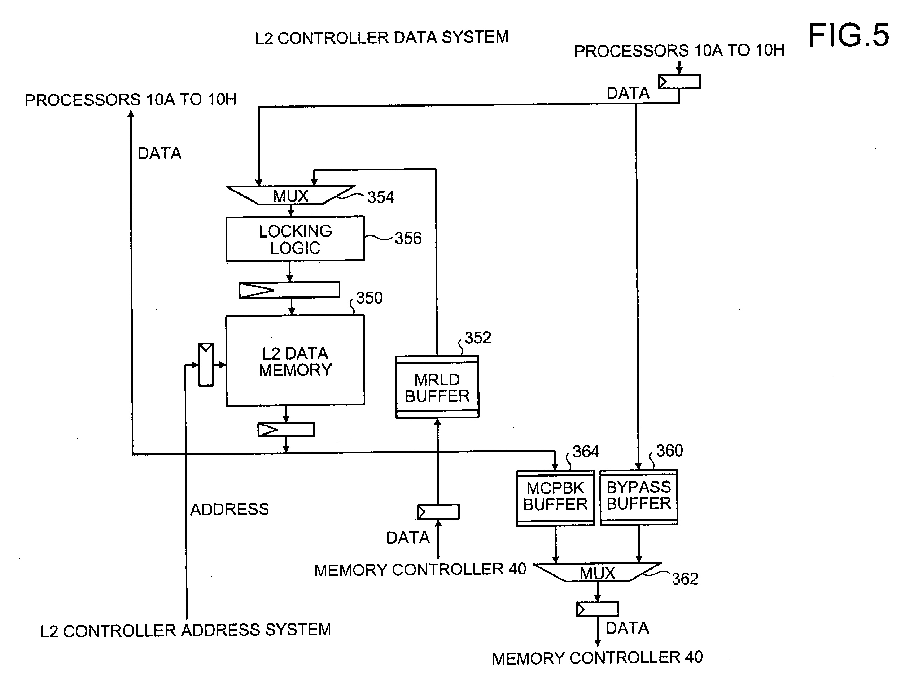

Fig. 5 is a schematic view of a data path in the L2 cache 30. The data path is explained assuming the following seven cases.
1. A read request hits the L2 cache 30.
2. The read request misses the L2 cache 30.
3. A write request hits the L2 cache 30.
4. The write request misses the L2 cache 30.
5. A copy back from an L2 data memory 350.
6. A test-and-set command hits the L2 cache 30.
7. The test-and-set command misses the L2 cache 30.

When the read request hits the L2 cache 30, an address of the L2 data memory 350 is supplied from an address system (shown in fig. 2) to the L2 data memory 350. The address is indicated by the corresponding RC machine. The data read from the L2 data memory 350 is transferred to the processors 10A to 10H.

When the read request misses the L2 cache 30, the data from the memory controller 40 passes through an MRLD buffer 352, a multiplexer (MUX) 354, and a locking logic 356, and is written to the L2 data memory 350. The address of the L2 data memory 350 is indicated by the corresponding RC machine. The data in the L2 data memory 350 is read and transferred to the processors 10A to 10H.

When the write request hits the L2 cache 30, the data from the processors 10A to 10H passes through the MUX 354 and the locking logic 356, and is written to the L2 data memory 350. The MUX 354 selects either one of the path from the processors 10A to 10H and the path from the memory controller 40. The address of the L2 data memory 350 is indicated by the corresponding CPBK machine.

When the write request misses the L2 cache 30, the data from the processors 10A to 10H passes through a bypass buffer 360 and a MUX 362, and is transferred to the memory controller 40. The data is not written to the L2 data memory 350.

The copy back from the L2 data memory 350 may be performed when the read request misses the L2 cache 30 or when the lock command misses the L2 cache 30. When the copy back is required for acquiring a new cache line, the data in the L2 data memory 350 is read and transferred to the memory controller 40 via an MCPBK buffer 364 and the MUX 362. The address of the L2 data memory 350 is indicated by an MCPBK machine.

When the test-and-set command hits the L2 cache 30, the data read from the L2 data memory 350 is transferred to the processors 10A to 10H. The locking logic 356 then prepares the data that indicates one at the lowest bit, and writes it to the L2 data memory 350. The address of the L2 data memory 350 is indicated by the corresponding lock machine.

When the test-and-set command misses the L2 cache 30, the data from the memory controller 40 passes through the MRLD buffer 352, the MUX 354, and the locking logic 356, and is written to the L2 data memory 350. The data is then read from the L2 data memory 350 and transferred to the processors 10A to 10H. The locking logic 356 then prepares the data that indicates one at the lowest bit, and writes it to the L2 data memory 350. The locking logic 356 generates the data that indicates one at the lowest bit.

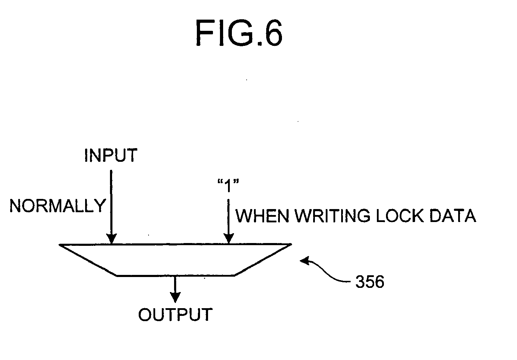

Fig. 6 is a schematic view for explaining a process performed by the locking logic 356. While the locking logic 356 normally outputs a value as it was input, the locking logic 356 outputs one to write lock data. While the locking logic 356 according to the present embodiment overwrites one regardless of the address to be locked, another locking operation such as a compare-and-swap operation can be used instead.

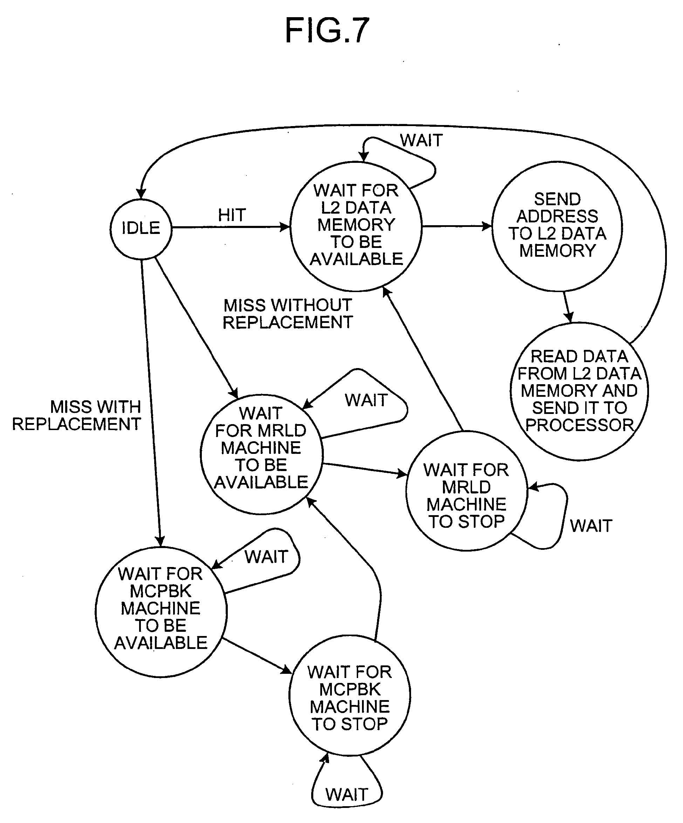

Next, an operation of each of the state machines will be explained. Fig. 7 is a bubble diagram for explaining state transition of the RC machine. The default of the RC machine is idle, and then performs an operation corresponding to the result of pulling the tag. Three cases can result from pulling the tag; hitting, missing without a replacement for the cache line, and missing with the replacement for the cache line.

In the case of hitting, the address is transferred from the RC machine to the L2 data memory 350 and the data is read from the L2 data memory while the L2 data memory is not being accessed. The data is then transferred to the processors 10A to 10H, and the RC machine is terminated.

In the case of missing without the replacement, the MRLD machine operates. The MRLD machine is used to write data from the memory controller 40 to the L2 data memory 350. When the MRLD machine is shared with another state machine, the RC machine waits until the MRLD machine gets ready to operate. When the MRLD machine is ready to operate, the RC machine starts the MRLD machine and waits until the MRLD machine stops. After the data is written to the L2 data memory 350, the MRLD machine is terminated. After the termination of the MRLD machine, the data read from the L2 data memory 350 is transferred to the processors 10A to 10H.

In the case of missing with the replacement, it is necessary to write the cache line to be replaced to the memory controller 40 using the MCPBK machine. The MCPBK machine is used to write the data from the cache line to the internal EDRAM 43 and the external SDRAM 44. When the MCPBK machine is shared with another state machine, the RC machine waits until the MCPBK machine gets ready to operate. When the MCPBK machine is ready to operate, the RC machine starts the MCPBK machine and waits until the MCPBK machine stops. After the MCPBK machine is terminated, the RC machine follows the same path as in the case of missing without replacement.

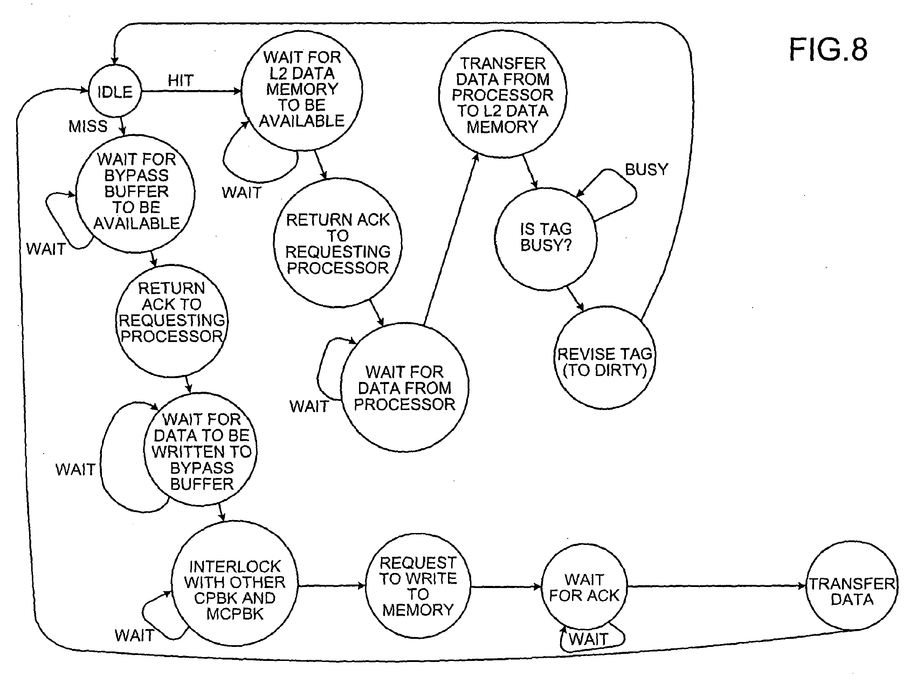

Fig. 8 is a bubble diagram for explaining state transition of the CPBK machine. The default of the CPBK machine is idle, and then performs an operation corresponding to the result of pulling the tag. Two cases can result from pulling the tag; hitting and missing.

In the case of hitting, the CPBK machine determines whether the L2 data memory 350 is being used by another state machine. If it is not being used, CPBK machine transfers the data from the requesting processor and updates the tag in the course of operations shown in Fig. 8.

In the case of missing, the CPBK machine does not write the data to the L2 data memory 350 and writes the data to the internal EDRAM 43 or the external SDRAM 44 via the bypass buffer 360. At first, the CPBK machine waits for the bypass buffer 360 to be available, because the data cannot be written from the processors 10A to 10H to the bypass buffer 360 when another CPBK machine is using the bypass buffer 360. After the bypass buffer 360 becomes available and the writing from the processor is completed, the CPBK machine writes the data to the internal EDRAM 43 or the external SDRAM 44.

The operations after the request for writing to the internal EDRAM 43 and the external SDRAM 44 can be performed by only one of the CPBK machines and the MCPBK machines at a time. For this reason, an arbiter is used for arbitration at interlocking.

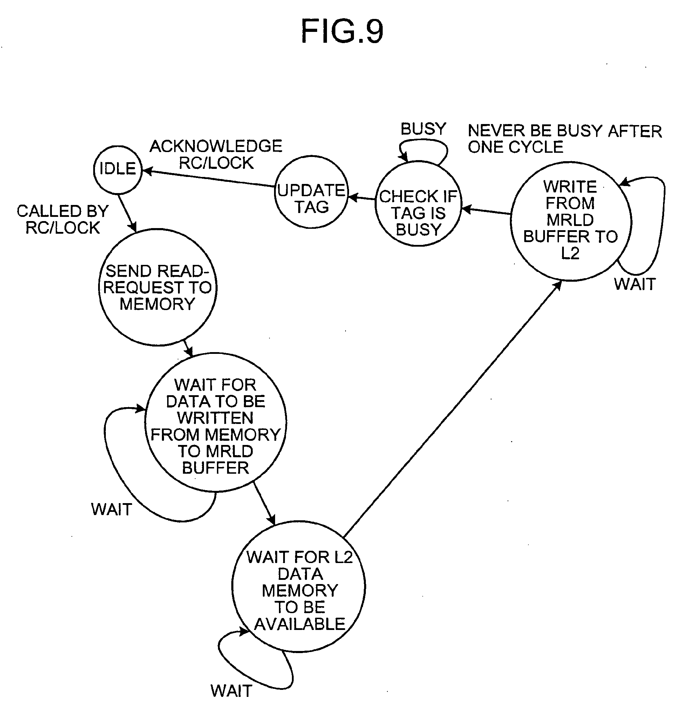

Fig. 9 is a bubble diagram for explaining state transition of the MRLD machine. As described above, the MRLD machine is called by the RC machine or the lock machine. Because there are a plurality of the RC machines and a plurality of the locking machines, sometimes arbitration is needed to call the MRLD machine. The arbitration generally uses a queue, and the MRLD machine is called by the oldest request in the queue. When another RC machine or locking machine is using the MRLD machine, the requesting state machine waits until the MRLD machine terminates the operation.

The called MRLD machine issues a request for reading to the memory controller 40, and waits for the data to be written to the MRLD buffer 352. The MRLD machine then waits for the L2 data memory 350 to be available. When the L2 data memory 350 is available, the MRLD machine writes the data from the MRLD buffer 352 to the L2 data memory 350 and updates the tag.

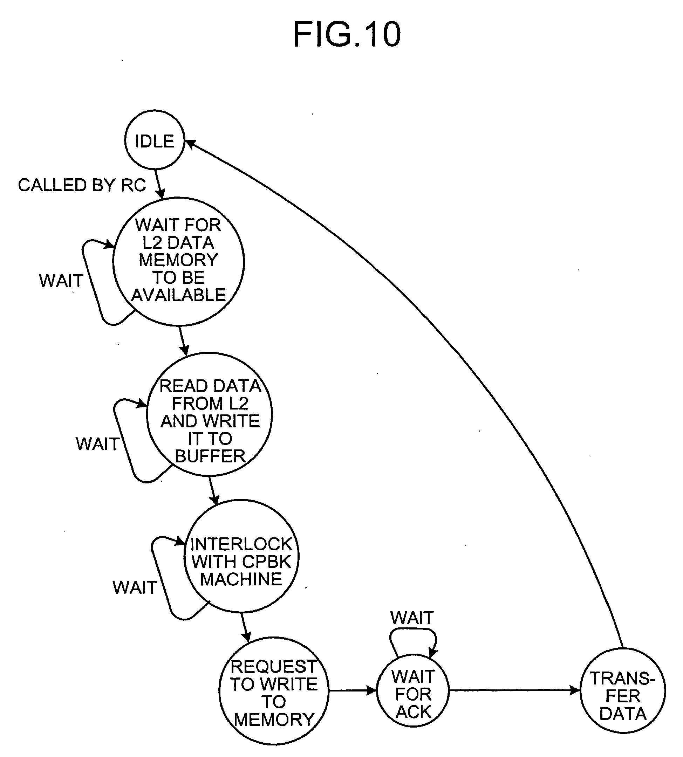

Fig. 10 is a bubble diagram for explaining state transition of the MCPBK machine. The MCPBK machine is called by the RC machine or the lock machine. Because there are a plurality of the RC machines and a plurality of the locking machines, sometimes arbitration is needed to call the MCPBK machine. The arbitration generally uses a queue, and the MCPBK machine is called by the oldest request in the queue. When another RC machine or locking machine is using the MCPBK machine, the requesting state machine waits until the MCPBK machine terminates the operation.

When the L2 data memory 350 is available, the called MCPBK machine reads the data from the L2 data memory 350 and writes the data to the MCPBK buffer 364. The MCPBK machine issues a request for reading to the memory controller 40. The arbitration is needed because the CPBK machine also issues a request for writing to the memory controller 40. More specifically, the arbiter performs the arbitration. When the request for writing to the memory controller 40 is authorized, the data is transferred from the MCPBK buffer 364 to the memory controller 40. The tag is not updated at this point because the update is performed by the RC machine.

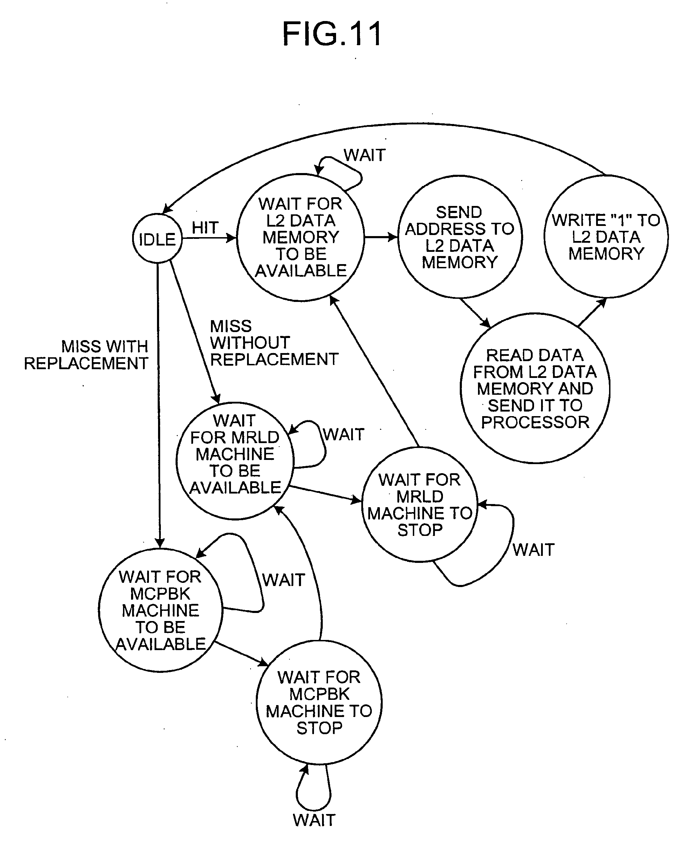

Fig. 11 is a bubble diagram for explaining state transition of the lock machine. The lock machine operates as the RC machine does except for an additional process of writing one to the lowest bit after sending the data to the processors 10A to 10H. The locking (test-and-set) mechanism can be realized by using a cache line stored in the L2 cache 30 by each of the mechanisms described above.

The explanation is given herein assuming that a plurality of processors competes for a lock. For example, when the three processors 10A to 10C try to lock an address number 1,000, zero is prewritten to the address number 1,000. The processors 10A to 10C access the address number 1,000 using the test-and-set command. It is assumed herein that a first processor 10A reaches the L2 cache 30 at first. When the first processor 10A misses the L2 cache 30, the L2 cache 30 reads the value zero of the address number 1,000 from the main memory, and stores it in the L2 data memory 350. The value of the address number 1,000 in the L2 cache 30 is updated to one. The first processor 10A acknowledges that locking was successful by receiving zero from the L2 cache 30. The first processor 10A starts a predetermined process.

Commands from a second processor 10B and a third processor 10C that reached the L2 cache 30 are stored in the recycle queue 330 to be processed in the order. After the process for the command by the first processor 10A is completed, the command by the second processor 10B is popped from the recycle queue 330 and the tag is pulled, which hits this time. However, because the address number 1,000 in the L2 cache 30 is locked by the first processor 10A and indicates one, the second processor 10B receives the value one from the address number 1,000 in the L2 cache 30.

The L2 cache 30 overwrites the value in the address number 1,000 with one. The second processor 10B acknowledges failure of locking by receiving the value one. The command by the third processor 10C is popped from the recycle queue 330 to be executed in the same manner, and acknowledges the failure of locking by receiving the value one.

Upon completion of the process, the first processor 10A that succeeded locking writes zero to the address number 1,000. The first processor 10A writes zero to the address number 1,000 which is related to the locking of the L2 cache 30. Due to this, the value in the address number 1,000 returns to zero again. Then, the first processor 10A flushes the data in the L1 cache (11A) to the L2 cache 30. Therefore, the locking by the first processor 10A is released.

While the locking mechanism according to the present embodiment locks the L2 data memory 350 by writing one to the L2 data memory 350, locking can be performed by, for example, reading the data from the L2 data memory 350 and adding one to the data. A value incremented by one needs to be written to the L2 data memory 350, and the process to do so is not limited to the present embodiment.

Next, an arbitration mechanism for running a single state machine requested by a plurality of the state machines will be explained. According to the present embodiment, for example, the RC machine and the lock machine call the MRLD machine when they missed the L2 cache 30. However, because there is only one MRLD machine, the arbitration among a plurality of the state machines is required.

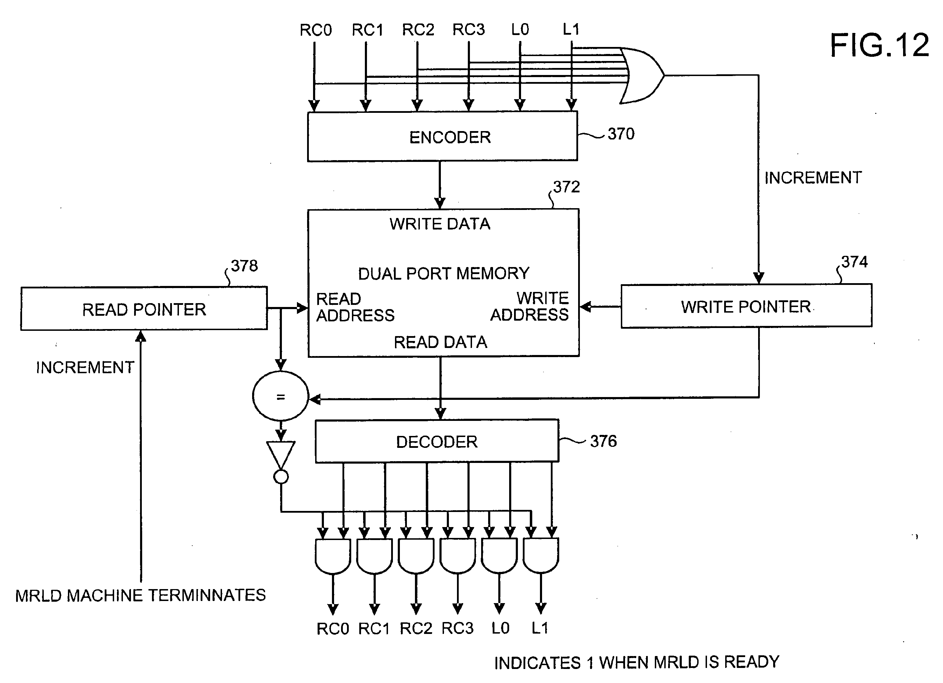

Fig. 12 is a schematic view of an arbitration mechanism for running a single state machine requested by a plurality of the state machines. Only one cycle of pulse to transit from the idle state to the state requesting the MRLD machine is emitted. There are six state machines that use the MRLD machine, which can be encoded by three bits. Because a single state machine can be dispatched per cycle, an input to an encoder 370 is a 1-hot code.

A value encoded by the encoder 370 is written to a dual port memory 372, and a write pointer 374 is incremented. The dual port memory 372 stores therein the values of the request in order of oldness on the FIFO basis. The dual port memory 372 has only to output the written values at appropriate timings, and a shift register or the like can be used.

The output from the dual port memory 372 is decoded again by a decoder 376 to be the 1-hot code. A ready signal is returned to the requesting state machine. However, when the write pointer 374 matches a read pointer 378, or when the FIFO configuration including the dual port memory 372 stores therein no value, the ready signal is not output. When the MRLD machine is terminated, the read pointer 378 is incremented, and a request for the MRLD machine by the next state machine is processed.

Next, an arbitration mechanism when a plurality of state machines share one equipment will be explained. According to the present embodiment, the state machines often wait for the L2 data memory 350 to be available. Each of the state machines determines whether the L2 data memory 350 is being used by another state machine, i.e. detects availability of the L2 data memory 350, and the waiting state machines acquire the L2 data memory 350 in the order determined by the arbitration.

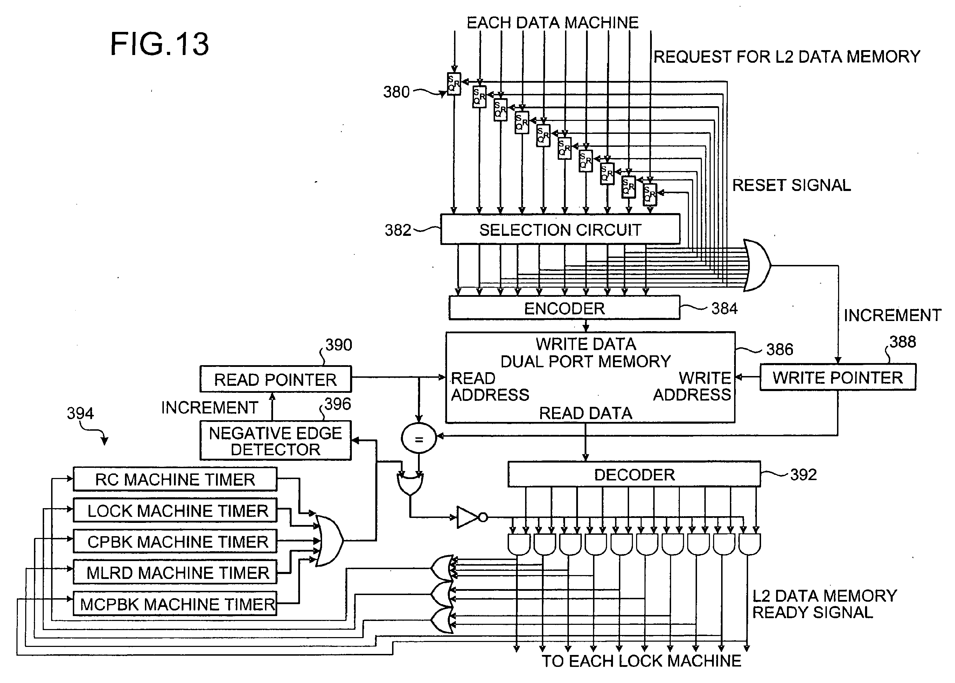

Fig. 13 is a schematic view of a mechanism for the state machine to acquire the L2 data memory 350. In the bus system 1 according to the present embodiment, each of the four RC machines, the two CPBK machines, the two lock machines, a single MRLD machine, and a single MCPBK machine sends a request to the L2 data memory 350.

Upon receiving the request from each of the state machines, a set-reset flip-flop (SRFF) 380 corresponding to each of the state machines is set. A selection circuit 382 selects only one of the requests. The selection circuit 382 selects the leftmost bit. The selection circuit selects only one request even if two machines send the requests at the same time.

The SRFF 380 corresponding to the request selected by the selection circuit 382 is reset by a reset signal. The selection circuit 382 outputs one bit per cycle. An encoder 384 inputs the output from the selection circuit 382 to a dual port memory 386.

The dual port memory 386 includes a write pointer 388 and a read pointer 390 to configure the FIFO. However, a shift register can be used instead.

When a value is input from the encoder 384 to the dual port memory 386, the write pointer 388 is incremented by one. Contents of the FIFO configuration are arranged in the order of using the L2 data memory 350. In other words, the first element in the FIFO uses the L2 data memory 350 at first. A decoder 392 converts the output from the dual port memory 386 to the ready signal in the L2 data memory 350 corresponding to each of the state machines. When the ready signal is output, a machine timer 394 corresponding to the type of the state machine starts to operate. The machine timer 394 can be an RC machine timer, a lock machine timer, a CPBK machine timer, an MRLD machine timer, or an MCPB machine timer.

During the operation of the machine timer 394, the first element in the FIFO is not processed, which prevents transmission of the ready signal from the L2 data memory 350 to another state machine. The machine timer 394 is set with a value corresponding to the type of the state machine. The output value is one only during a predetermined number of cycles after the ready signal is output.

When the operation of the machine timer 394 is terminated, a negative edge detector 396 detects the fact that the output is converted from one to zero, and the read pointer 390 is incremented. This makes the next element in the FIFO ready. When the FIFO is empty, the values are compared between the read pointer 390 and the write pointer 388, and they match so that the ready signal is not output.

Additional advantages and modifications will readily occur to those skilled in the art. Therefore, the invention in its broader aspects is not limited to the specific details and representative embodiments shown and described herein. Accordingly, various modifications may be made without departing from the spirit or scope of the general inventive concept as defined by the appended claims and their equivalents.

## Claims

1. A cache memory (30) connected to a plurality of processors (10A to 10H) comprising:
a command receiving unit (301) that receives a plurality of commands from each of the plurality of processors (10A to 10H) ;
a processing unit (304) that performs a process based on each of the commands; and
a storage unit (301) that stores in a queue (330) a first command, when the command receiving unit (301) receives the first command while the processing unit (304) is processing a second command, a cache line address corresponding to the first command being identical to a cache line address corresponding to the second command which is being processed by the processing unit (304).

2. The cache memory (30) according to claim 1, further comprising:
a reading unit (301) that reads the first command when the processing unit (304) completes processing of the second command, wherein
the processing unit (304) performs a process based on the first command read by the reading unit (301).

3. The cache memory (30) according to claim 2, wherein the reading unit (301) reads the commands in the order of storing from the oldest, when a plurality of commands are stored in the queue (330).

4. The cache memory (30) according to claim 2 or 3, wherein the processing unit (304) performs a locking process to the command.

5. The cache memory (30) according to any one of claims 2 to 4, further comprising:
a plurality of first state machines (306, 310) that are provided corresponding to types of the commands, and monitors a state of processing for each of the commands, wherein
the processing unit (304) operates one of the first state machine (306, 307) that corresponds to the second command, and
the reading unit (301) reads the first command from the queue (330) when the first state machine completes an operation.

6. The cache memory (30) according to claim 5, wherein the storage unit (301) stores the first command in the queue (330), when the command receiving unit (301) receives the first command while all of the first state machines (306, 310) for the type of the first command are occupied.

7. The cache memory (30) according to claim 5 or 6, further comprising:
a plurality of second state machines to be called by the first state machines, number of the second state machines being less than that of the first state machines; and
an arbitration unit (370 to 378) that generates a waiting queue of a plurality of the first state machines, and allows the first state machines (306, 310) to call the second state machines in the order of storing in the waiting queue from the oldest.

8. The cache memory (30) according to any one of claims 5 to 7, further comprising:
a plurality of equipments (350) to be used by the first state machines (306, 310), number of the equipments (350) being less than that of the first state machines (306, 310);
an arbitration unit (380 to 392, 396) that generates a waiting queue (330) of a plurality of the first state machines, and allows the first state machines to use the equipments in the order of storing in the waiting queue (330) from the oldest ; and
a timer (394) that manages time to use the equipments corresponding to the types of the first state machines, wherein
the arbitration unit (380 to 392, 396) determines that a requested equipment is available when the timer (394) counts the time, and allows an oldest first state machine in the waiting queue to use the requested equipment.

9. A cache memory connected to a plurality of processors (10A to 10H) comprising:
a command receiving unit (301) that receives a plurality of commands from each of the plurality of processors (10A to 10H);
a processing unit (304) that performs a process based on each of the received commands;
a plurality of first state machines (306 to 310) that are provided corresponding to types of the commands, and monitors a state of processing for each of the commands; and
a storage unit (301) that stores in a queue (330) the command received by the command receiving unit (301), when the command receiving unit (301) receives the command while all of the first state machines (306 to 310) for the type of the command are occupied.

10. A processing method in a cache memory connected to a plurality of processors (10A to 10H), comprising:
receiving a plurality of commands from each of the plurality of processors (10A to 10H);
performing a process based on each of the commands; and
storing in a queue (330) a first command, when the first command is received while a second command is processed, a cache line address corresponding to the first command being identical to a cache line address corresponding to the second command which is being processed.

11. The method according to claim 10, wherein the first command stored in the queue (330) is read when processing of the second command is completed, and a process based on the read first command is performed.

12. The method according to claim 11, wherein the commands are read in the order of storing from the oldest, when a plurality of commands are stored in the queue (330).

13. The method according to claim 11, wherein a locking process to the command is performed.

14. The method according to claim 11, further comprising:
operating a first state machine (306, 310) corresponding to the second command among a plurality of first state machines (306, 310) that are provided corresponding to types of the commands and monitors a state of processing for each of the commands; and
reading the first command from the queue (330) when the first state machine (306, 310) completes an operation.

15. The method according to claim 14, wherein the first command is stored in the queue (330), when the first command is received while all of the first state machines (306, 310) for the type of the first command are occupied.

16. The method according to claim 14, further comprising:
generating a waiting queue (330) of a plurality of the first state machines (306, 310) for calling one of a plurality of second state machines, number of the second state machines being less than that of the first state machines (306, 310); and
allowing the first state machines (306, 310) to call the second state machines in the order of storing in the waiting queue from the oldest.

17. The method according to claim 14, further comprising:
generating a waiting queue (330) of a plurality of the first state machines (306, 310) for using one of a plurality of equipments (350), number of the equipments (350) being less than that of the first state machines (306, 310);
allowing the first state machines (306, 310) to use the equipments (350) in the order of storing in the waiting queue from the oldest;
managing time to use the equipments (350) corresponding to the types of the first state machines (306, 310);
determining that a requested equipment is available when the time is counted by a timer (394); and
allowing an oldest first state machine (306, 310) in the waiting queue to use the requested equipment.

18. A processing method in a cache memory connected to a plurality of processors (10A to 10H), comprising:
receiving a plurality of commands from each of the plurality of processors (10A to 10H);
performing a process based on each of the received commands; and
storing in a queue (330) a command, when the command is received while all of first state machines (306, 310) for the type of the command are occupied among a plurality of the first state machines (306, 310) that are provided corresponding to types of the commands, and monitors a state of processing for each of the commands.
